# EUROPEAN PATENT APPLICATION

(11) **EP 4 498 509 A1**
(43) Date of publication of application: **29.01.2025**
(21) Application number: 22957729.1
(22) Date of filing: 08.09.2022
(51) Int. Cl.: H01M 50/59, H01M 50/15

(54) **END COVER ASSEMBLY, BATTERY CELL, BATTERY, AND ELECTRIC DEVICE**

(71) Applicant: Contemporary Amperex Technology Co., Limited, Ningde, Fujian 352100 (CN)
(72) Inventor: LIN, Denghua, Ningde, Fujian 352100 (CN); CHEN, Long, Ningde, Fujian 352100 (CN); CHEN, Xinxiang, Ningde, Fujian 352100 (CN); ZHENG, Yulian, Ningde, Fujian 352100 (CN); JIN, Haizu, Ningde, Fujian 352100 (CN); WANG, Peng, Ningde, Fujian 352100 (CN); HUANG, Shoujun, Ningde, Fujian 352100 (CN)
(74) Representative: Herrmann, Uwe
(86) International application number: PCT/CN2022/117825
(87) International publication number: WO 2024/050757

(57) **Abstract**

Embodiments of the present application provide an end cover assembly, a battery cell, a battery, and an electrical apparatus, wherein the end cover assembly comprises a first cover plate, a second cover plate, a first insulating member, and anti-rotation means, wherein the first cover plate is used to close a first case, the second cover plate is used to close a second case, and the second cover plate is provided opposite to the first cover plate along a first direction in order for the first case closed by the first cover plate and the second case closed by the second cover plate to be arranged along the first direction, the first insulating member is provided between the first cover plate and the second cover plate, and the anti-rotation means is provided between the first insulating member and the first cover plate and between the first insulating member and the second cover plate in order to prevent relative rotation between the first insulating member and the first cover plate and between the first insulating member and the second cover plate.

## Description

### TECHNICAL FIELD

The present application relates to the technical field of batteries, and in particular to an end cover assembly, a battery cell, a battery, and an electrical apparatus.

### BACKGROUND

Energy saving and emission reduction are the key to the sustainable development of automobile industry, and electric vehicles have become an important part of the sustainable development of automotive industry due to their advantages of energy saving and environmental protection. For electric vehicles, battery technology is an important factor related to their development.

During the use of a battery, the relative stability between some constituent components concerns the structural stability of the battery; in particular, for some combined types of battery cells, the shell thereof is generally formed by connecting at least two cases head to tail, and two adjacent shells are connected to each other by an end cover having an integrated structure, and this type of end cover usually comprises two end cover plates disposed opposite to each other, with the two end covers being used to cover the openings of the two neighboring cases, respectively. The relative stability relationship between these constituent components directly affects the structural stability of the battery cell.

### SUMMARY OF THE INVENTION

The present application provides an end cover assembly, a battery cell, a battery and an electrical apparatus that can maintain relative stability between a first cover plate and a first insulating member and between a second cover plate and a second insulating member, thereby improving the structural stability of the battery cell.

In a first aspect, the present application provides an end cover assembly, comprising a first cover plate, a second cover plate, a first insulating member, and anti-rotation means, wherein the first cover plate is used to close a first case, the second cover plate is used to close a second case, and the second cover plate is provided opposite to the first cover plate along a first direction, the first insulating member is provided between the first cover plate and the second cover plate, and the anti-rotation means is provided between the first insulating member and the first cover plate and between the first insulating member and the second cover plate in order to prevent relative rotation between the first insulating member and the first cover plate and between the first insulating member and the second cover plate.

In this embodiment, by providing anti-rotation means between the first insulating member and the first cover plate and between the first insulating member and the second cover plate, it is possible to prevent relative rotation between the first insulating member and the first cover plate and between the first insulating member and the second cover plate, and consequently to increase the anti-torsion capability of the end cover assembly and the battery cell assembled with the end cover assembly, thereby improving the structural stability of the battery cell.

In some embodiments, the anti-rotation means comprises an anti-rotation component, a first groove provided in the first cover plate, and a second groove provided in the second cover plate, wherein the anti-rotation component is provided on the first insulating member, and the anti-rotation component comprises a first protruding portion protruding from the first insulating member and inserted at least partially into the first groove and a second protruding portion protruding from the first insulating member and inserted at least partially into the second groove.

By providing the first protruding portion and inserting at least part of the first protruding portion into the first groove, it can be used to prevent relative rotation between the first insulating member and the first cover plate; and by providing the second protruding portion and inserting at least part of the second protruding portion into the second groove, it can be used to prevent relative rotation between the first insulating member and the second cover plate.

In some embodiments, the first protruding portion and the first insulating member are integrally formed; and/or, the second protruding portion and the first insulating member are integrally formed.

This embodiment may omit the steps of connecting the first protruding portion with the first insulating member and the second protruding portion with the first insulating member, respectively, which can simplify the assembling step and thereby improve the assembling efficiency.

In some embodiments, the first insulating member is provided with a mounting hole, and the anti-rotation component further comprises an intermediate portion inserted in the mounting hole, and the first protruding portion, the second protruding portion, and the intermediate portion are integrally formed.

In this embodiment, by arranging the first protruding portion, the second protruding portion, and the intermediate portion to be integrally formed, it is possible to make the anti-rotation component to serve as a whole separate part, which facilitates the separate manufacture of the anti-rotation component, and it is also possible to avoid the problems of a large number of parts and complicated installation caused by separating it into the first protruding portion and the second protruding portion.

In some embodiments, the anti-rotation component is cylindrically shaped, and the ratio of a diameter D2 of the anti-rotation component to a diameter D3 of the mounting hole is 0.8 to 1.

In this embodiment, in the case where the ratio of D2 to D3 is less than 0.8, the gap between the anti-rotation component and the hole wall of the mounting hole is large, so that when the anti-rotation component is subjected to a torsional force, the anti-rotation component will be displaced to a certain extent, which in turn may result in interference between the battery cell assembled with the end cover assembly and other components in the battery pack. When the ratio of D2 to D3 is greater than 1, this corresponds to a situation where there is no gap or even there is an interference fit between the anti-rotation component and the hole wall of the mounting hole, which can result in the anti-rotation component not being able to be assembled into the mounting hole, the first groove or the second groove.

In some embodiments, the ratio of a volume V of the first protruding portion to a protruding height H of the first protruding portion protruding from the first insulating member is 1.5 to 1300.

In this embodiment, when the ratio of V to H is less than 1.5, the diameter of the portion of the first protruding portion protruding from the first insulating member may be made too small or the protruding height H of the first protruding portion protruding from the first insulating member may be made too large, which in turn affects the structural strength of the first protruding portion itself. In contrast, when the ratio of V to H is greater than 1300, the protruding height of the first protruding portion protruding from the first insulating member is made too small, and thus the anti-torsion effect is not good, and the first protruding portion is prone to slide out of the first groove or the second groove at this time.

In some embodiments, the end cover assembly further comprises a connecting post, wherein the first cover plate is provided with a first through hole, the second cover plate is provided with a second through hole, and the first insulating member is provided with a third through hole, the connecting post passing through the first through hole, the third through hole, and the second through hole in sequence for electrically connecting a first electrode assembly provided in the first case and a second electrode assembly provided in the second case.

In this embodiment, by providing a connecting post, an electrical connection between the first electrode assembly provided in the first case and the second electrode assembly provided in the second case is realized. Moreover, the connecting post may also cooperate with the anti-rotation means to realize the function of preventing relative rotation between the first insulating member and the first cover plate and between the first insulating member and the second cover plate.

In some embodiments, the connecting post is cylindrically shaped, the distance from at least one of the first protruding portion and the second protruding portion to the connecting post is d, and the connecting post has a diameter of D1, where the ratio of d to D1 is 0.5 to 20.

In this embodiment, the ratio of d to D1 is controlled to be between 0.5 and 20, so that a better anti-torsion capability can be realized. When the ratio of d to D1 is less than 0.5, it indicates that at least one of the first protruding portion and the second protruding portion is close to the connecting post, and it can be seen from the torque formula T=F*L (T is the torque, F is the force, and L is the torque) that, when the anti-rotation component 45 is subjected to a certain force, the shorter the distance L is, the worse the anti-torsion capability T is. When the ratio of d to D1 is greater than 20, it indicates that at least one of the first protruding portion and the second protruding portion is far away from the connecting post, at which point at least one of the first protruding portion and the second protruding portion is too close to the edge of the first insulating member, which can result in the thicknesses of parts of the walls of the first groove and the second groove being too small, and thus having poor strength.

In some embodiments, the first protruding portion and the second protruding portion are cylindrically shaped.

In some embodiments, the connecting post is cylindrically shaped, at least one of the first protruding portion and the second protruding portion has a diameter of D2, and the connecting post has a diameter of D1, wherein the ratio of D2 to D1 is 0.01 to 0.98.

In this embodiment, when the ratio of D2 to D1 is less than 0.01, at least one of the first protruding portion and the second protruding portion has a small diameter, and the anti-torsion effect is poor. When the ratio of D2 to D1 is greater than 0.98, at least one of the first protruding portion and the second protruding portion has a large diameter and occupies a large amount of space, thus reducing the space for other components, and also resulting in insufficient strength of parts of the first insulating member provided with the mounting hole, the first cover plate provided with the first groove, and the second cover plate provided with the second groove.

In some embodiments, the ratio of the diameter D2 of the first protruding portion to the protruding height H of the first protruding portion is 0.1 to 10.

In this embodiment, when the ratio of D2 to H is less than 0.1, the diameter of the first protruding portion is too small or the protruding height of the first protruding portion is too high, which reduces the structural strength of the first protruding portion itself. When the ratio of D2 to H is greater than 10, the protruding height of the first protruding portion is made too small, and thus the anti-torsion effect is not good, and the first protruding portion is prone to slide out of the first groove at this time.

In some embodiments, the ratio of the volume V of the first protruding portion to the diameter D2 of the first protruding portion is 2 to 400.

In this embodiment, when the ratio of V to D2 is less than 2, the protruding height of the first protruding portion is made too small, and thus the anti-torsion effect is not good, and the first protruding portion is prone to slide out of the first groove at this time. In contrast, when the ratio of V to D2 is greater than 400, the diameter of the first protruding portion is made too small or the protruding height of the first protruding portion is too large, which reduces the structural strength of the first protruding portion itself.

In some embodiments, the first insulating member is of a square structure, and in a length direction of the first insulating member, the distance from the anti-rotation component to the connecting post is L; and in a width direction of the first insulating member, the distance from the anti-rotation component to the connecting post is W, wherein the ratio of W to L is greater than or equal to 0.01.

In this embodiment, when the ratio of W to L is less than 0.01, the anti-rotation component and the connecting post are approximately located on the same horizontal line, at which time the anti-torsion effect is poor.

In a second aspect, the present application provides a battery cell, comprising an end cover assembly described above.

In a third aspect, the present application provides a battery, comprising a box as well as a battery cell described above, wherein the battery cell is provided in the box, and the battery cell is used to provide electrical energy.

In a fourth aspect, the present application provides an electrical apparatus, which comprises a battery cell described above, the battery cell being used to supply electrical energy to the electrical apparatus; or comprises a battery described above, the battery being used to supply electrical energy to the electrical apparatus.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

### DESCRIPTION OF DRAWINGS

In order to more clearly illustrate the technical solutions of embodiments of the present application, the following is a brief description of the accompanying drawings to be used in the embodiments of the present application. It is obvious that the accompanying drawings described below are only some embodiments of the present application, and other accompanying drawings can be obtained according to the accompanying drawings without any creative work for a person of ordinary skill in the art.
Fig. 1 is a structural schematic diagram of some embodiments of an electrical apparatus disclosed in the present application;
Fig. 2 is a structural schematic diagram of some embodiments of a battery disclosed in the present application;
Fig. 3 is an exploded view of some embodiments of a battery cell disclosed in the present application;
Fig. 4 is a structural schematic diagram of some embodiments of a battery cell disclosed in the present application;
Fig. 5 is a top view of some embodiments of the battery cell disclosed in the present application;
Fig. 6 is a cross-sectional view along an A-A section in Fig. 5;
Fig. 7 is an exploded view of some embodiments of an end cover assembly disclosed in the present application;
Fig. 8 is an exploded view of the case in which the anti-rotation component in the embodiment of Fig. 7 is mounted behind a first insulating member;
Fig. 9 is a structural schematic diagram of the first insulating member in the embodiment of Fig. 7;
Fig. 10 is a structural schematic diagram of some embodiments of the end cover assembly disclosed in the present application;
Fig. 11 is a top view of some embodiments of the end cover assembly disclosed in the present application;
Fig. 12 is a cross-sectional view along a B-B section in Fig. 11;
Fig. 13 is a main view of a first insulating member in some embodiments of the end cover assembly disclosed in the present application;
Fig. 14 is a top view of some other embodiments of the end cover assembly disclosed in the present application;
Fig. 15 is a cross-sectional view along a C-C section in Fig. 14;
Fig. 16 is a side view of some embodiments of the end cover assembly disclosed in the present application; and
Fig. 17 is a cross-sectional view along a D-D section in Fig. 16.

In the accompanying drawings, the accompanying drawings are not drawn to actual scale.

### Description of reference numerals:

1000, vehicle; 100, battery; 200, axle; 300, wheel; 400, motor; 500, controller;
101, battery cell; 102, box; 102a, box body; 102b, cover body;
10, end cover assembly; 20, first case; 30, second case; 40, first electrode assembly; 50, second electrode assembly; 60, first end cover assembly; 70, second end cover assembly;
1, first cover plate; 11, first through hole; 2, second cover plate; 21, second through hole; 3, first insulating member; 31, third through hole; 4, anti-rotation means; 41, anti-rotation component; 411, first protruding portion; 412, second protruding portion; 413, intermediate portion; 42, first groove; 43, second groove; 44, mounting hole; 5, first conductive member; 51, connecting post; 52, position-limiting portion; 6, second conductive member; 61, fourth through hole 7, second insulating member; 71, fifth through hole; 8, third insulating member; 81, sixth through hole; 91, first sealing member; 92, second sealing member.

### DETAILED DESCRIPTION

Examples of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific examples and are not intended to limit the present application; the terms "comprise/include" and "have" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. Furthermore, the term "vertical" is not strictly vertical, but is within the allowable range of error. "Parallel" is not strictly parallel, but is within the allowable range of error.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of embodiments of the present application, the term "multiple" refers to two or more, unless otherwise expressly and specifically defined. Similarly, the term "multiple groups" refers to two or more groups, and the term "multiple pieces" refers to two or more pieces, unless otherwise expressly and specifically defined.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc., are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The inventors of the present application note that, as the range of applications for power batteries continues to expand, the demand of various electrical apparatuses for battery capacity is also increasing. In order to increase the capacity of the battery as much as possible within a limited storage space, people have begun to arrange the battery cell into the form of a structure comprising two cells, and the two cells are connected in series, which saves part of the intermediate electrical connection components and saves part of the space for the battery, thus supporting the increase in the capacity of the battery.

Since the length of the battery cell comprising two cells is greater than the length of the battery cell comprising one cell, during use, the battery cell may be subjected to a lateral shear force that causes the two serially connected cells to be twisted relative to each other, thus affecting the overall quality of the battery cell and the safety of use.

The inventors have found, after research, that anti-rotation means can be provided between the first insulating member and the first cover plate and between the first insulating member and the second cover plate, so as to prevent relative rotation between the first insulating member and the first cover plate and between the first insulating member and the second cover plate, and consequently to increase the anti-torsion capability of the end cover assembly and the battery cell assembled with the end cover assembly.

The end cover assembly disclosed in embodiments of the present application is applicable to a battery cell, a battery, and an electrical apparatus using the battery.

The electrical apparatus may be a mobile phone, a portable device, a laptop computer, a battery vehicle, an electric vehicle, a ship, a spacecraft, an electric toy and a power tool, among others. For example, the spacecraft comprises an airplane, a rocket, a space shuttle, a spaceship, and the like; the electric toy comprises a fixed or mobile electric toy, such as a game console, an electric car toy, an electric ship toy and an electric aircraft toy, and so on; and the electric tool comprises a metal cutting electric tool, a grinding electric tool, an assembly electric tool and a railway electric tool, such as an electric drill, an electric grinder, an electric wrench, an electric screwdriver, an electric hammer, an impact drill, a concrete vibrator and an electric planer.

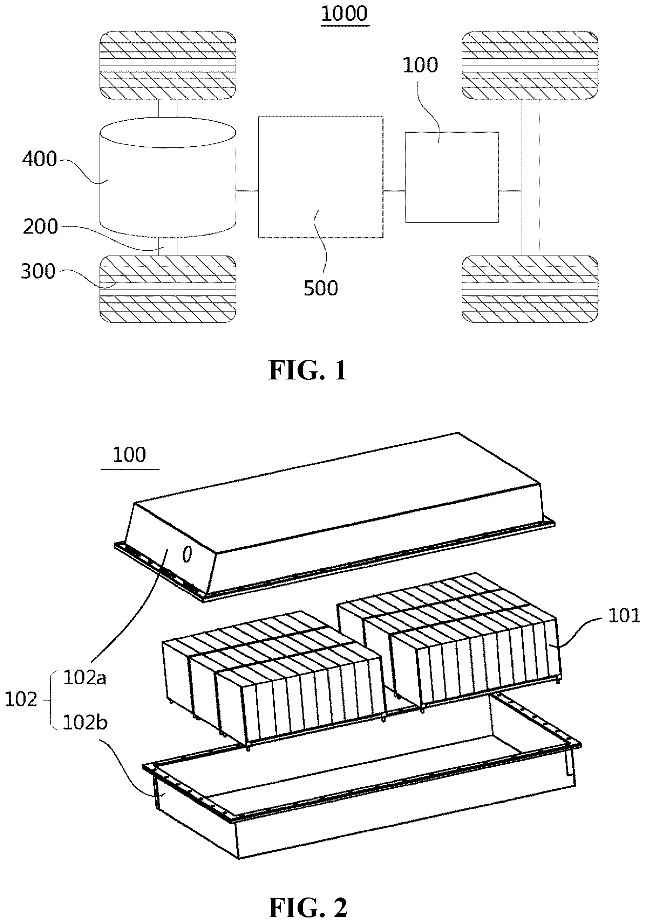

As shown in Fig. 1, the electrical apparatus may be a vehicle 1000, such as a new energy vehicle, which may be an all-electric vehicle, a hybrid vehicle, or an extended range electric vehicle, and the like; or the electrical apparatus may be a drone or a ship, and the like. Specifically, the vehicle 1000 may comprise a battery 100, an axle 200, wheels 300 connected to the axle 200, a motor 400, and a controller 500, wherein the controller 500 is used to control the operation of the motor 400, the motor 400 is used to drive the axle 200 to rotate, the axle 200 rotates to drive the wheel 300 to rotate, and the battery 100 may be disposed at the bottom, the head, or the tail of the vehicle 1000, and is used to provide electrical energy for the operation of the motor 400 and other components in the vehicle.

As shown in Fig. 2, the battery 100 comprises a battery cell 101 and a box 102. **In** the battery 100, there may be one or multiple battery cells 101. If there are multiple battery cells 101, the multiple battery cells 101 may be connected in series or in parallel or in series-parallel connection, the series-parallel connection means that the multiple battery cells 101 are connected in both series and in parallel, and it may be that the multiple battery cells 101 are first connected in series or in parallel or in series-parallel connection to form a battery module, and then multiple battery modules are connected in series or in parallel or in series-parallel connection to form an integrated whole and accommodated in the box 102. It may also be that all the battery cells 101 are directly connected in series or in parallel or in series-parallel connection, and then the integrated whole composed of all the battery cells 101 is accommodated in the box body 102.

The box 102 has a hollow structure inside. For example, the box body 102 may comprise a box body 102a and a cover body 102b. The box body 102a and the cover body 102b are snapped together. For example, the box body 102a and the cover body 102b may both be hollow rectangular and may each have only one face as an open face, the opening of the box body 102a and the opening of the cover body 102b are provided opposite to each other, and the box body 102a and the cover body 102b are snapped with each other to form a box body having a closed cavity. Alternatively, the box body 102a is a rectangular body having an opening and the cover body 102b is in the form of a plate, or the cover body 102b is a rectangular body having an opening and the box body 102a is in the form of a plate, and the box body 102a and the cover body 102b are disposed relative to each other and are snapped together to form the box 102 having a closed cavity. At least one battery cell 101 is connected in parallel or in series with each other or in a series-parallel connection and placed inside the closed cavity formed by snapping together the box body 102a and the cover body 102b.

Among them, the battery cell 101 comprises a lithium-ion secondary battery, a lithium-ion primary battery, a lithium-sulfur battery, a sodium-lithium-ion battery, a sodium-ion battery, a magnesium-ion battery, or the like, which is not limited in embodiments of the present disclosure. The battery cell may be cylindrical, flat, rectangular or in other shapes, which is also not limited in the embodiments of the present disclosure. The battery cells are generally classified into three types according to encapsulating manners: cylindrical battery cells, prismatic rectangular battery cells, and pouch cells, which are not limited in the embodiments of the present disclosure.

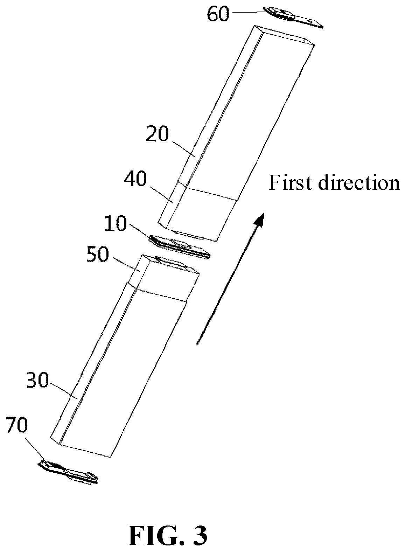

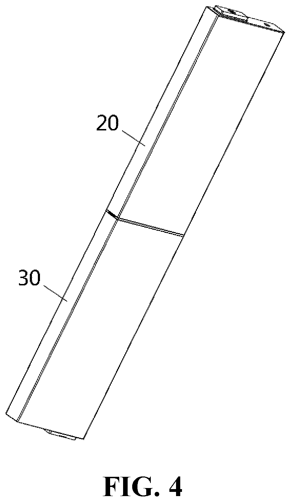

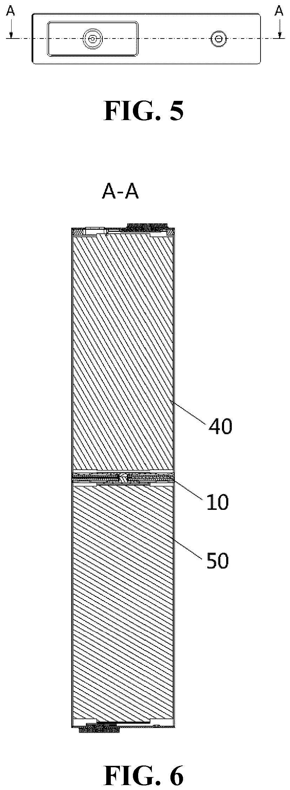

In some embodiments, as shown in Figs. 3 to 6, the battery cell comprises an end cover assembly 10, a first case 20, a second case 30, a first electrode assembly 40, a second electrode assembly 50, a first end cover assembly 60, and a second end cover assembly 70.

The first case 20 and the second case 30 each have an opening, the first electrode assembly 40 is accommodated inside the first case 20, and the second electrode assembly 50 is accommodated inside the second case 30.

The first case 20 and the second case 30 have oppositely disposed openings, and the end cover assembly 10 is disposed between the first case 20 and the second case 30. The first end cover assembly 60 and the second end cover assembly 70 are provided at openings of the first case 20 and the second case 30, respectively, that are far from each other.

The first case 20 and the second case 30 are each filled with an electrolyte solution. Both the first electrode assembly 40 and the second electrode assembly 50 may be formed by laminating or winding a first electrode plate and a second electrode plate of opposite polarities, and a separator is typically provided between the first electrode plate and the second electrode plate. The portions of the first electrode plate and the second electrode plate coated with the coating form the main body portions of the first electrode assembly 40 and the second electrode assembly 50, and the uncoated portions of the first electrode plate and the second electrode plate each form two types of tabs of opposite polarities. The first tab on the first electrode assembly 40 and the second tab on the second electrode assembly 50 are electrically connected via the end cover assembly 10, the other tab on the first electrode assembly 40 is connected to a terminal on the first end cover assembly 60, and the other tab on the second electrode assembly 50 is connected to a terminal on the second end cover assembly 70.

The first case 20 and the second case 30 may be of a variety of shapes and a variety of sizes, such as rectangular shapes, cylindrical shapes, hexagonal shapes, and the like. Specifically, the shapes of the first case 20 and the second case 30 may be determined based on the specific shapes and dimensional sizes of the first electrode assembly 40 and the second electrode assembly 50. The first case 20 and the second case 30 may be made of a variety of materials, such as, for example, copper, iron, aluminum, stainless steel, aluminum alloy, plastic, etc., and the embodiments of the present application do not impose any special limitations in this regard.

In order to make it possible to understand more clearly the principle of the improvement of the battery cell of the present application, the structure of the end cover assembly is first described in detail.

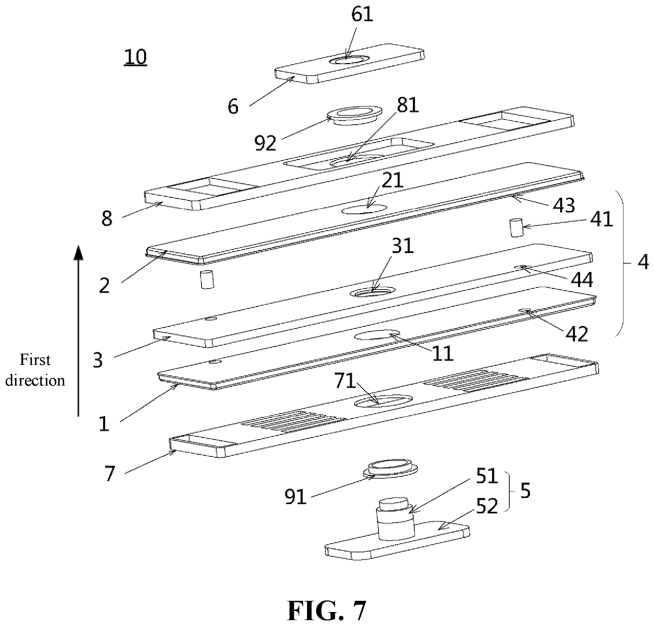

Referring to Figs. 7 to 9, in some embodiments of the present application, the end cover assembly 10 comprises a first cover plate 1, a second cover plate 2, a first insulating member 3, and anti-rotation means 4, wherein the first cover plate 1 is used to close the first case 20, the first case 20 being used to accommodate the first electrode assembly 40, and the second cover plate 2 is used to close the second case 30, the second case 30 being used to accommodate the second electrode assembly 50, and the second cover plate 2 is provided opposite to the first cover plate 1 along a first direction in order for the first case 20 closed by the first cover plate 1 and the second case 30 closed by the second cover plate 2 to be arranged along the first direction, the first insulating member 3 is provided between the first cover plate 1 and the second cover plate 2, and the anti-rotation means 4 is provided between the first insulating member 3 and the first cover plate 1 and between the first insulating member 3 and the second cover plate 2 in order to prevent relative rotation between the first insulating member 3 and the first cover plate 1 and between the first insulating member 3 and the second cover plate 2.

In this embodiment, by providing the anti-rotation means 4 between the first insulating member 3 and the first cover plate 1 and between the first insulating member 3 and the second cover plate 2, it is possible to prevent the relative rotation between the first insulating member 3 and the first cover plate 1 and the relative rotation between the first insulating member 3 and the second cover plate 2, thereby maintaining the relative stability between the first insulating member 3 and the first cover plate 1 and between the first insulating member 3 and the second cover plate 2, i.e., maintaining the relative stability between the first cover plate 1 and the second cover plate 2, which in turn improves the anti-torsion capability of the end cover assembly and the battery cell assembled with the end cover assembly, thereby improving the structural stability of the battery cell.

The anti-rotation means 4 provided between the first insulating member 3 and the first cover plate 1 prevents relative rotation between the first insulating member 3 and the first cover plate 1. The anti-rotation means 4 provided between the first insulating member 3 and the second cover plate 2 prevents relative rotation between the first insulating member 3 and the second cover plate 2. After the relative rotation between the first insulating member 3 and the first cover plate 1 and the relative rotation between the first insulating member 3 and the second cover plate 2 are both limited to a certain extent, the anti-torsion capability between the first cover plate 1 and the second cover plate 2 is also improved, and the anti-torsion capability between the first case 20 connected to the first cover plate 1 and the second case 30 connected to the second cover plate 2 is also improved, thereby effectively improving the anti-torsion capability of the entire battery cell, thus improving the quality of the battery cell.

Among them, the first cover plate 1 is used to close the first case 20, and the first cover plate 1 and the first case 20 form a substantially closed space in which the first electrode assembly 40, the electrolyte solution, and other components can be accommodated. The second cover plate 2 is used to close the second case 30, and the second cover plate 2 and the second case 30 form a substantially closed space in which the second electrode assembly 50, the electrolyte solution, and other components can be accommodated.

The first case 20 and the second case 30 may be of a variety of shapes and a variety of sizes, such as rectangular shapes, cylindrical shapes, hexagonal shapes, and the like. Specifically, the shapes and dimensional sizes of the first case 20 and the second case 30 may be determined based on the specific shapes and dimensional sizes of the first electrode assembly 40 and the second electrode assembly 50. The first case 20 and the second case 30 may be of the same shape or may be of different shapes. The first case 20 and the second case 30 may be made of a variety of materials, such as, for example, copper, iron, aluminum, stainless steel, aluminum alloy, plastic, etc., and the embodiments of the present application do not impose any special limitations in this regard.

There may be various options for the shapes and dimensional sizes of the first cover plate 1 and the second cover plate 2, which may be, for example, circular, square, pentagonal or hexagonal, and so on. Specifically, the shapes and dimensional sizes of the first cover plate 1 and the second cover plate 2 may be determined based on the shapes and dimensional sizes of the first case 20 and the second case 30. The first cover plate 1 and the second cover plate 2 may be of the same shape or may be of different shapes. The first cover plate 1 and the second cover plate 2 may be made of a variety of materials, such as, for example, copper, iron, aluminum, stainless steel, aluminum alloy, plastic, etc., and the embodiments of the present application do not impose any special limitations in this regard.

There may also be various options for the shapes and dimensional sizes of the first insulating member 3, which may be, for example, circular, square, pentagonal, or hexagonal, and so on. The shapes and dimensional sizes of the first insulating member 3 may be the same as or different from the shapes and dimensional sizes of the first cover plate 1 and the second cover plate 2. The first insulating member 3 may be made of a variety of materials, such as, for example, plastic, rubber, ceramic, etc., and the embodiments of the present application do not impose any special limitations in this regard.

The first insulating member 3 is provided between the first cover plate 1 and the second cover plate 2, and the area of the orthographic projection of the first cover plate 1 on the first insulating member 3 may be greater than, less than or equal to the surface area of the first insulating member 3. The area of the orthographic projection of the second cover plate 2 on the first insulating member 3 may be greater than, less than or equal to the surface area of the first insulating member 3.

The two sides of the first insulating member 3 may be in contact with the first cover plate 1 and the second cover plate 2, respectively; alternatively, the two sides of the first insulating member 3 have a gap from the first cover plate 1 and the second cover plate 2, respectively, within which other components may be arranged, respectively.

There are various options for the specific structure of the anti-rotation means 4, which are described below in connection with several embodiments.

As shown in Figs. 7 to 9, in some embodiments, the anti-rotation means 4 comprises an anti-rotation component 41, a first groove 42 provided in the first cover plate 1, and a second groove 43 provided in the second cover plate 2, wherein the anti-rotation component 41 is provided on the first insulating member 3, and the anti-rotation component 41 comprises a first protruding portion 411 protruding from the first insulating member 3 and inserted at least partially into the first groove 42 and a second protruding portion 412 protruding from the first insulating member 3 and inserted at least partially into the second groove 43.

By providing the first protruding portion 411 and inserting at least part of the first protruding portion 411 into the first groove 42, it can be used to prevent relative rotation between the first insulating member 3 and the first cover plate 1; and by providing the second protruding portion 412 and inserting at least part of the second protruding portion 412 into the second groove 43, it can be used to prevent relative rotation between the first insulating member 3 and the second cover plate 2.

Among them, the shape of the first protruding portion 411 is mated with the shape of the first groove 42, and the shape of the second protruding portion 412 is mated with the shape of the second groove 43.

In this embodiment, there may be various options for the numbers of first protruding portions 411, first grooves 42, second protruding portions 412, and second grooves 43. There are an equal number of first protruding portions 411 and first grooves 42, which may be one, two or more, for example. There are an equal number of second protruding portions 412 and second grooves 43, which may be one, two or more, for example. The numbers of first protruding portions 411 and first grooves 42 may be the same as, or different from, the numbers of second protruding portions 412 and second grooves 43.

In some embodiments, there is non-rotational mating between the first protruding portion 411 and the first groove 42 to prevent relative rotation between the first insulating member 3 and the first cover plate 1; and there is non-rotational mating between the second protruding portion 412 and the second groove 43 to prevent relative rotation between the first insulating member 3 and the first cover plate 1. For example, the first protruding portion 411 is of a square structure and the first groove 42 is a square groove; and the second protruding portion 412 is of a square structure and the second groove 43 is a square groove.

In other embodiments, the first protruding portion 411 and the second protruding portion 412 may also be in the shape of a three-pronged prism, a five-pronged prism, or the like, and correspondingly the first groove 42 and the second groove 43 are triangular grooves or pentagonal grooves, or the like.

In some embodiments, the first protruding portion 411 and the first groove 42 are both at least two in number to prevent relative rotation between the first insulating member 3 and the first cover plate 1; and the second protruding portion 412 and the second groove 43 are both at least two in number to prevent relative rotation between the first insulating member 3 and the first cover plate 1.

In some embodiments, the end cover assembly 10 further comprises a connecting post 51, wherein the first cover plate 1 is provided with a first through hole 11, the second cover plate 2 is provided with a second through hole 21, and the first insulating member 3 is provided with a third through hole 31, the connecting post 51 passing through the first through hole 11, the third through hole 31, and the second through hole 21 in sequence for electrically connecting a first electrode assembly 40 provided in the first case 20 and a second electrode assembly 50 provided in the second case 30. The numbers of the first protruding portion 411 and the first groove 42 are both one, and since the axis of rotation of the first protruding portion 411 is not collinear with the axis of rotation of the connecting column 51, relative rotation between the first insulating member 3 and the first cover plate 1 can be prevented in this manner; and the numbers of the second protruding portion 412 and the second groove 43 are both one, and since the axis of rotation of the second protruding portion 412 is not collinear with the axis of rotation of the connecting post 51, relative rotation between the first insulating member 3 and the first cover plate 1 can also be prevented in this manner.

Of course, in some embodiments, provided that the connecting post 51 is included, the numbers of the first protruding portion 411 and the first groove 42 and the numbers of the second protruding portion 412 and the second groove 43 may also be two or more to improve the anti-rotation effect.

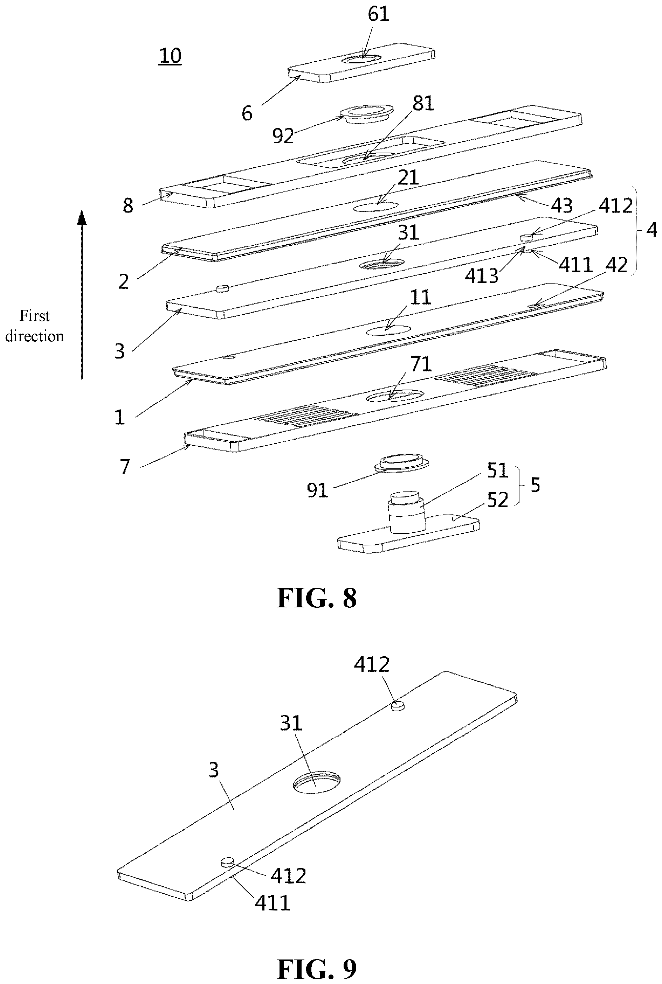

As shown in Fig. 9, in some embodiments, the number of anti-rotation means 4 is two, the first cross section of the first insulating member 3 is square, and the projections of the two anti-rotation means 4 on the first cross section are spaced apart on a diagonal of the first cross-section.

Here, the first cross section is a face passing through the first insulating member 3. Specifically, there may be various options for the first cross section. In this embodiment, the first cross section, which is square in shape, is used as a reference surface, and on this reference surface, the projections of the two anti-rotation means 4 are spaced apart on the diagonal of this square reference surface. For example, where the first insulating member 3 is of a square plate-like structure, the first cross section may be an outer surface of the first insulating member 3 that is close to the first cover plate 1, or may be an outer surface of the first insulating member 3 that is close to the second cover plate 2, or may be a face that is located between the outer surface of the first insulating member 3 that is close to the first cover plate 1 and the outer surface of the first insulating member 3 that is close to the second cover plate 2, and is parallel to the outer surface of the first insulating member 3 that is close to the first cover plate 1 and the outer surface of the first insulating member 3 that is close to the second cover plate 2.

By providing two anti-rotation means 4, the anti-torsion capability of the end cover assembly 10 can be further improved. In the case where the first cross section of the first insulating member 3 is square, the projections of the two anti-rotation means 4 on the first cross section are disposed to be spaced apart on the diagonal of the first cross section, which can further enhance the anti-torsion capability.

In some embodiments, the end cover assembly further comprises a connecting post 51, wherein the first cover plate 1 is provided with a first through hole 11, the second cover plate 2 is provided with a second through hole 21, and the first insulating member 3 is provided with a third through hole 31, the connecting post 51 passing through the first through hole 11, the third through hole 31, and the second through hole 21 in sequence for electrically connecting a first electrode assembly 40 provided in the first case 20 and a second electrode assembly 50 provided in the second case 30. The projections of the two anti-rotation means 4 and the connecting post 51 on the first cross section are collinear.

By arranging the projections of the two anti-rotation means 4 and the connecting post 51 on the first cross section to be collinear, the anti-torsion capability of the end cover assembly 10 can be further enhanced.

In some embodiments, the first protruding portion 411 and the first insulating member 3 are integrally formed; and/or, the second protruding portion 412 and the first insulating member 3 are integrally formed.

This embodiment may omit the steps of connecting the first protruding portion 411 with the first insulating member 3 and the second protruding portion 412 with the first insulating member 3, respectively, which can simplify the assembling step and thereby improve the assembling efficiency.

In some embodiments, the first insulating member 3 is provided with a mounting hole 44, and the anti-rotation component 41 further comprises an intermediate portion 413 inserted in the mounting hole 44, and the first protruding portion 411, the second protruding portion 412, and the intermediate portion 413 are integrally formed.

In this embodiment, by arranging the first protruding portion 411, the second protruding portion 412, and the intermediate portion 413 to be integrally formed, it is possible to make the anti-rotation component 41 to serve as a whole separate part, which facilitates the separate manufacture of the anti-rotation component 41, and it is also possible to avoid the problems of a large number of parts and complicated installation caused by separating it into the first protruding portion 411 and the second protruding portion 412.

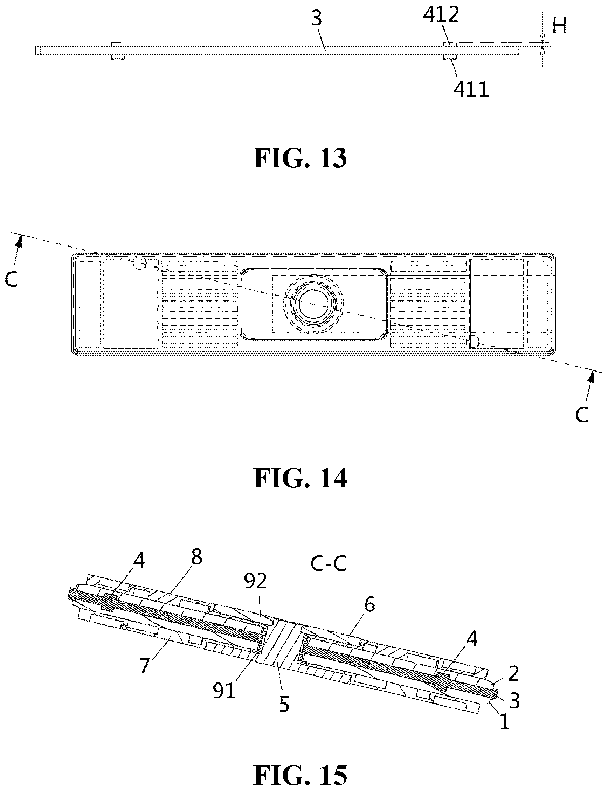

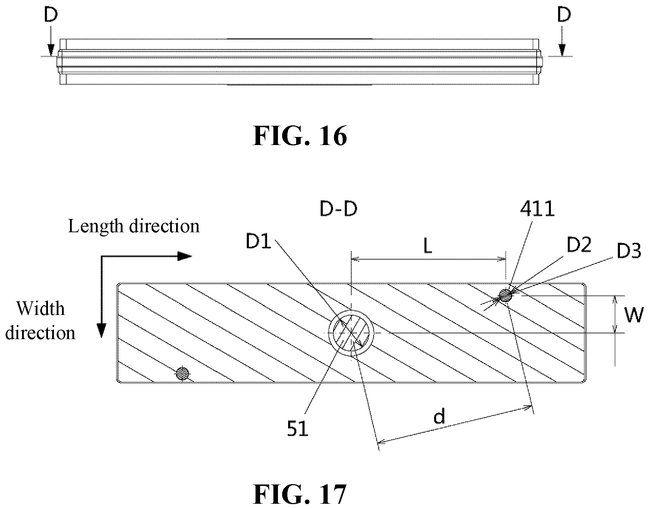

As shown in Figs. 13 and 17, in some embodiments, the anti-rotation component 41 is cylindrically shaped, and the ratio of a diameter D2 of the anti-rotation component 41 to a diameter D3 of the mounting hole 44 is 0.8 to 1.

For example, the ratio of D2 to D3 may be 0.8, 0.82, 0.84, 0.86, 0.88, 0.9, 0.91, 0.92, 0.93, 0.94, 0.95, 0.96, 0.97, 0.98, 0.99, 1, and the like.

As demonstrated by extensive experiments conducted by the inventor, in this embodiment, in the case where the ratio of D2 to D3 is less than 0.8, the gap between the anti-rotation component 41 and the hole wall of the mounting hole 44 is large, so that when the anti-rotation component 41 is subjected to a torsional force, the anti-rotation component 41 will be displaced to a certain extent, which in turn may result in interference between the battery cell assembled with the end cover assembly and other components in the battery pack. When the ratio of D2 to D3 is greater than 1, this corresponds to a situation where there is no gap or even there is an interference fit between the anti-rotation component 41 and the hole wall of the mounting hole 44, which can result in the anti-rotation component 41 not being able to be assembled into the mounting hole 44, the first groove 42 or the second groove 43.

In some embodiments, the diameter D2 of the anti-rotation component 41 may be 0.5 to 30.

For example, the diameter D2 of the anti-rotation component 41 may be 0.5, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 and the like.

In some embodiments, the diameter D3 of the mounting hole 44 may be 0.7 to 35.

For example, the diameter D3 of the mounting hole 44 may be 0.7, 1, 2, 4, 4.1, 4.2, 4.5, 4.8, 5, 5.1, 5.5, 6, 8, 10, 12, 14, 16, 18, 20, 22, 24, 26, 28, 30, 31, 32, 33, 34, 35, and the like.

Table 1 below illustrates the comparative results of Comparative Embodiments 01 to 06 in which the ratio of D2 to D3 does not satisfy the condition of 0.8 to 1, and Embodiments 01 to 03 in which the ratio of D2 to D3 satisfies the condition of 0.8 to 1.

**Table 1 Comparative results of Comparative Embodiments 02 to 06 and Embodiments 01 to 03**

| | D3 (mm) | D2 (mm) | D2/D3 (mm/mm) | Rotatable angle (°) | Maximum movement distance (mm) | Effect |
|---|---|---|---|---|---|---|
| Comparative Embodiment 01 | 6 | 4 | 0.67 | 0.67 | 2 | Large gap, wobbly |
| Comparative Embodiment 02 | 6.4 | 5 | 0.78 | 0.43 | 1.4 | Large gap, wobbly |
| Comparative Embodiment 03 | 5 | 3.9 | 0.78 | 0.44 | 1.1 | Large gap, wobbly |
| Comparative Embodiment 04 | 5.9 | 6 | 1.02 | 0.04 | -0.1 | Overfilled, unassembleable |
| Comparative Embodiment 05 | 3.8 | 4 | 1.05 | 0.11 | -0.2 | Overfilled, unassembleable |
| Comparative Embodiment 06 | 2.4 | 4 | 1.67 | 1.33 | -1.6 | Overfilled, unassembleable |
| Embodiment 01 | 5.5 | 5 | 0.91 | 0.18 | 0.5 | Good anti-rotation effect |
| Embodiment 02 | 4.2 | 4 | 0.95 | 0.1 | 0.2 | Good anti-rotation effect |
| Embodiment 03 | 5.1 | 5 | 0.98 | 0.14 | 0.1 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in the Comparative Embodiments 01 to 03, the gap between the anti-rotation component 41 and the mounting hole 44 is large, so that the anti-rotation component 41 will twist and move in the mounting hole 44 in the course of use, thus affecting the anti-rotation effect.

In the Comparative Embodiments 04 to 06, there is an overfill between the anti-rotation component 41 and the mounting hole 44, which can lead to a situation where the anti-rotation component 41 cannot be assembled into the mounting hole 44, thus affecting the anti-rotation effect.

In contrast, in Embodiments 01 to 03, the ratio of the diameter D2 of the anti-rotation component 41 to the diameter D3 of the mounting hole 44 satisfies the condition of 0.8 to 1, so that the anti-rotation component 41 and the mounting hole 44 are properly mated with each other and the anti-rotation effect is good.

In some embodiments, the ratio of a volume V of the first protruding portion 411 to a protruding height H of the first protruding portion 411 protruding from the first insulating member 3 is 1.5 to 1300.

For example, the ratio of the volume V of the first protruding portion 411 to the protruding height H of the first protruding portion 411 protruding from the first insulating member 3 may be 1.5, 1.6, 1.8, 2.0, 10, 100, 200, 300, 400, 500, 600, 700, 800, 900, 1000, 1100, 1200, 1300, and the like.

As demonstrated by extensive experiments conducted by the inventor, in this embodiment, when the ratio of V to H is less than 1.5, the diameter of the portion of the first protruding portion 411 protruding from the first insulating member 3 may be made too small or the protruding height H of the first protruding portion 411 protruding from the first insulating member 3 may be made too large, which in turn affects the structural strength of the first protruding portion 411 itself. In contrast, when the ratio of V to H is greater than 1300, the protruding height of the first protruding portion 411 protruding from the first insulating member 3 is made too small, and thus the anti-torsion effect is not good, and the first protruding portion 411 is prone to slide out of the first groove 42 or the second groove 44 at this time.

In some embodiments, the volume V of the first protruding portion 411 may be 6 to 13,000.

For example, the volume V of the first protruding portion 411 may be 6, 8, 10, 100, 500, 1000, 2000, 4000, 6000, 8000, 10000, 11000, 12000, 13000, and the like.

In some embodiments, the protruding height H of the first protruding portion 411 protruding from the first insulating member 3 may be 1 to 10.

For example, the protruding height H of the first protruding portion 411 protruding from the first insulating member 3 may be 1, 2, 3, 4, 5, 6, 7, 8, 9, 10, and the like.

Table 2 below illustrates the comparative results of Comparative Embodiments 11 to 16 in which the ratio of V to H does not satisfy the condition of 1.5 to 1300, and Embodiments 11 to 14 in which the ratio of V to H satisfies the condition of 1.5 to 1300.

**Table 2 Comparative results of Comparative Embodiments 11 to 16 and Embodiments 11 to 14**

| | D2 (mm) | H (mm) | V (mm³) | V/H (mm³/mm) | Torsion limit value (N • m) | Effect |
|---|---|---|---|---|---|---|
| Comparative Embodiment 11 | 1.3 | 10 | 13.3 | 1.33 | 1 | The first protruding portion is broken. |
| Comparative Embodiment 12 | 1.3 | 2 | 2.7 | 1.33 | 1 | The first protruding portion is broken. |
| Comparative Embodiment 13 | 1.3 | 5 | 7 | 1.4 | 1 | The first protruding portion is broken. |
| Comparative Embodiment 14 | 41 | 5 | 6598 | 1320 | 2 | The first protruding portion slides out. |
| Comparative Embodiment 15 | 41 | 3 | 3959 | 1320 | 3 | The first protruding portion slides out. |
| Comparative Embodiment 16 | 42 | 1 | 1384 | 1384 | 2 | The first protruding portion slides out. |
| Embodiment 11 | 2 | 2 | 6.28 | 3.14 | 7 | Good anti-rotation effect |
| Embodiment 12 | 4 | 3 | 37.68 | 12.56 | 12 | Good anti-rotation effect |
| Embodiment 13 | 20 | 3 | 942 | 314 | 7 | Good anti-rotation effect |
| Embodiment 14 | 38 | 3 | 3400 | 1134 | 6 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in the Comparative Embodiments 11 to 13, the first protruding portion 411 occupies a large height space, and thus affects the energy density of the battery cell; moreover, the first protruding portion 411 has a small anti-rotation diameter and is of low strength, and thus can withstand a torsion limit value of 1 N • m, at which time the first protruding portion 411 is highly susceptible to fracture, and thus the anti-rotation effect is not good.

In the Comparative Embodiments 14 to 16, the first protruding portion 411 occupies a large length and width space, and thus also affects the energy density of the battery cell; moreover, the first protruding portion 411 has an excessively large anti-rotation diameter, a small height, and a small height-to-width ratio, and can withstand a torsion limit value of 2N • m, at which time the first protruding portion 411 is extremely easy to slip out of the first groove 42, and thus the anti-rotation effect is not good.

In contrast, in Embodiments 11 to 14, the ratio of the volume V of the first protruding portion 411 to the protruding height H of the first protruding portion 411 protruding from the first insulating member 3 satisfies the condition of 1.5 to 1300, and thus the height-to-width ratio is suitable and the torsion that can be withstood satisfies the demand, so that the first protruding portion 411 is neither prone to break nor prone to slide out of the first groove 42, and thus the anti-rotation effect is good.

In some embodiments, the ratio of the volume V of the second protruding portion 412 to the protruding height H of the second protruding portion 412 protruding from the first insulating member 3 may also be set to be 1.5 to 1300.

In some embodiments, the end cover assembly 10 further comprises a connecting post 51, wherein the first cover plate 1 is provided with a first through hole 11, the second cover plate 2 is provided with a second through hole 21, and the first insulating member 3 is provided with a third through hole 31, the connecting post 51 passing through the first through hole 11, the third through hole 31, and the second through hole 21 in sequence for electrically connecting a first electrode assembly 40 provided in the first case 20 and a second electrode assembly 50 provided in the second case 30.

In this embodiment, by providing a connecting post 51, an electrical connection between the first electrode assembly 40 provided in the first case 20 and the second electrode assembly 50 provided in the second case 30 is realized. Moreover, the connecting post 51 may also cooperate with the anti-rotation means 4 to realize the function of preventing relative rotation between the first insulating member 3 and the first cover plate 1 and between the first insulating member 3 and the second cover plate 2.

In some embodiments, the connecting post 51 is cylindrically shaped, the distance from at least one of the first protruding portion 411 and the second protruding portion 412 to the connecting post 51 is m, and the connecting post 51 has a diameter of D1, where the ratio of d to D1 is 0.5 to 20.

For example, the ratio of d to D1 may be 0.5, 1, 2, 3, 4, 5, 6, 7, 8, 9, 10, 11, 12, 13, 14, 15, 16, 17, 18, 19, 20, and the like.

As demonstrated by extensive experiments conducted by the inventor, in this embodiment, the ratio of d to D1 is controlled to be between 0.5 and 20, so that a better anti-torsion capability can be realized. When the ratio of d to D1 is less than 0.5, it indicates that at least one of the first protruding portion 411 and the second protruding portion 412 is close to the connecting post 51, and it can be seen from the torque formula T=F*L (T is the torque, F is the force, and L is the torque) that, when the anti-rotation component 45 is subjected to a certain force, the shorter the distance L is, the worse the anti-torsion capability T is. When the ratio of d to D1 is greater than 20, it indicates that at least one of the first protruding portion 411 and the second protruding portion 412 is far away from the connecting post 51, at which point at least one of the first protruding portion 411 and the second protruding portion 412 is too close to the edge of the first insulating member 3, which can result in the thicknesses of parts of the walls of the first groove 42 and the second groove 43 being too small, and thus having poor strength.

This embodiment comprises three cases. In the first case, the connecting post 51 is cylindrically shaped, and the distance from the first protruding portion 411 to the connecting post 51 is d1, and the connecting post 51 has a diameter of D1, wherein the ratio of d1 to D1 is 0.5 to 20. In the second case, the connecting post 51 is cylindrically shaped, and the distance from the second protruding portion 412 to the connecting post 51 is d2, and the connecting post 51 has a diameter of D1, wherein the ratio of d2 to D1 is 0.5 to 20. In the third case, the connecting post 51 is cylindrically shaped, and the distance from the first protruding portion 411 to the connecting post 51 is d1, and the connecting post 51 has a diameter of D1, wherein the ratio of d1 to D1 is 0.5 to 20; and the distance from the second protruding portion 412 to the connecting post 51 is d2, and the connecting post 51 has a diameter D1, wherein the ratio of d2 to D1 is 0.5 to 20.

In some embodiments, the distance d from at least one of the first protruding portion 411 and the second protruding portion 412 to the connecting post 51 may be 1 to 600.

For example, d can be 1, 50, 100, 150, 200, 250, 300, 350, 400, 450, 500, 550, 600, and so on.

In some embodiments, the diameter D1 of the connecting post 51 may be 1 to 30.

For example, D1 can be 1, 2, 5, 7, 19, 12, 15, 17, 20, 22, 25, 27, 30 and so on.

Taking the first protruding portion 411 as an example, Table 3 below illustrates the comparative results of Comparative Embodiments 31 to 36 in which the ratio of d to D1 does not satisfy the condition of 0.5 to 20, and Embodiments 31 to 34 in which the ratio of d to D1 satisfies the condition of 0.5 to 20.

**Table 3 Comparative results of Comparative Embodiments 31 to 36 and Embodiments 31 to 34**

| | d (mm) | D1 (mm) | d/D1 (mm/mm) | Torsion limit value (N • m) | Effect |
|---|---|---|---|---|---|
| Comparative Embodiment 31 | 2 | 5 | 0.4 | 2 | The first protruding portion slides out. |
| Comparative Embodiment 32 | 1.4 | 3 | 0.47 | 1 | The first protruding portion slides out. |
| Comparative Embodiment 33 | 1.9 | 4 | 0.48 | 2 | The first protruding portion slides out. |
| Comparative Embodiment 34 | 82 | 4 | 20.5 | 3 | The first insulating member is deformed. |
| Comparative Embodiment 35 | 64 | 3 | 21.3 | 2 | The first insulating member is deformed. |
| Comparative Embodiment 36 | 110 | 5 | 22 | 2 | The first insulating member is deformed. |
| Embodiment 31 | 5 | 2 | 2.5 | 7 | Good anti-rotation effect |
| Embodiment 32 | 20 | 4 | 5 | 10 | Good anti-rotation effect |
| Embodiment 33 | 40 | 5 | 8 | 9 | Good anti-rotation effect |
| Embodiment 34 | 45 | 3 | 15 | 6 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in Comparative Embodiments 31 to 33, the first protruding portion 411 is close to the connecting post 51, and according to the torque formula T=F*L, it can be seen that at this time, the first protruding portion 411 is prone to slide out of the first groove 42, and thus the anti-rotation effect is not good.

In Comparative Embodiments 34 to 36, the first protruding portion 411 is far away from the connecting post 51, and at this time, the first protruding portion 411 is too close to the edge, which will result in the wall thickness of parts of the first groove 42 being too small, and thus the strength is not good; moreover, the force arm is long, and at this time, the torsion limit value that the first protruding portion 411 can withstand is 2.5 N • m, and the middle part of the first insulating member 3 may be deformed, and thus the anti-rotation effect is not good.

In contrast, in embodiments 31 to 34, the ratio of the distance d between the first protruding portion 411 and the connecting post 51 to the D1 of the connecting post 51 satisfies the condition of 0.5 to 20, resulting in a suitable length of the force arm, and thus the anti-rotation effect is good.

In some embodiments, the first protruding portion 411 and the second protruding portion 412 are cylindrically shaped.

In this embodiment, by arranging both the first protruding portion 411 and the second protruding portion 412 to be cylindrically shaped, it is possible to facilitate the manufacture and assembly of the first protruding portion 411 and the second protruding portion 412.

In other embodiments, the first protruding portion 411 and the second protruding portion 412 may also be of other shapes such as square or triangular prism.

In some embodiments, the connecting post 51 is cylindrically shaped, at least one of the first protruding portion 411 and the second protruding portion 412 has a diameter of D2, and the connecting post 51 has a diameter of D1, wherein the ratio of D2 to D1 is 0.01 to 0.98.

For example, the ratio of D2 to D1 can be 0.01, 0.03, 0.05, 0.07, 0.09, 0.1, 0.2, 0.3, 0.4, 0.5, 0.6, 0.7, 0.8, 0.9, 0.91, 0.92, 0.93, 0.94, 0.95, 0.96, 0.97, 0.98, and so on.

As demonstrated by extensive experiments conducted by the inventor, in this embodiment, when the ratio of D2 to D1 is less than 0.01, at least one of the first protruding portion 411 and the second protruding portion 412 has a small diameter, and the anti-torsion effect is poor. When the ratio of D2 to D1 is greater than 0.98, at least one of the first protruding portion 411 and the second protruding portion 412 has a large diameter and occupies a large amount of space, thus reducing the space for other components, and also resulting in insufficient strength of parts of the first insulating member 3 provided with the mounting hole 44, the first cover plate 1 provided with the first groove 42, and the second cover plate 2 provided with the second groove 43.

This embodiment comprises three cases. In the first case, the connecting post 51 is cylindrically shaped, and the first protruding portion 411 has a diameter of D21, and the connecting post 51 has a diameter of D1, wherein the ratio of D21 to D1 is 0.01 to 0.98. In the second case, the connecting post 51 is cylindrically shaped, and the second protruding portion 412 has a diameter of D22, and the connecting post 51 has a diameter of D1, wherein the ratio of D22 to D1 is 0.01 to 0.98. In the third case, the connecting post 51 is cylindrically shaped, and the first protruding portion 411 has a diameter of D21, and the connecting post 51 has a diameter of D1, wherein the ratio of D21 to D1 is 0.01 to 0.98; and the second protruding portion 412 has a diameter of D22 and the connecting post 51 has a diameter of D1, wherein the ratio of D22 to D1 is 0.01 to 0.98.

Taking the first protruding portion 411 as an example, Table 4 below illustrates the comparative results of Comparative Embodiments 41 to 46 in which the ratio of D2 to D1 does not satisfy the condition of 0.01 to 0.98, and Embodiments 41 to 44 in which the ratio of D2 to D1 satisfies the condition of 0.01 to 0.98.

**Table 4 Comparative results of Comparative Embodiments 41 to 46 and Embodiments 41 to 44**

| | D2 (mm) | D1 (mm) | D2/D1 (mm/mm) | Torsion limit value (N • m) | Effect |
|---|---|---|---|---|---|
| Comparative Embodiment 41 | 0.05 | 6 | 0.008 | 1 | The first protruding portion is partially broken |
| Comparative Embodiment 42 | 0.09 | 10 | 0.009 | 1 | The first protruding portion is partially broken |
| Comparative Embodiment 43 | 0.9 | 100 | 0.009 | 1 | The first protruding portion is partially broken |
| Comparative Embodiment 44 | 10 | 10 | 1 | 2 | The first insulating member is partially broken |
| Comparative Embodiment 45 | 6.5 | 6 | 1.1 | 2 | The first insulating member is partially broken |
| Comparative Embodiment 46 | 12 | 10 | 1.2 | 2 | The first insulating member is partially broken |
| Embodiment 41 | 3 | 20 | 0.15 | 9 | Good anti-rotation effect |
| Embodiment 42 | 3 | 10 | 0.3 | 7 | Good anti-rotation effect |
| Embodiment 43 | 5 | 10 | 0.5 | 10 | Good anti-rotation effect |
| Embodiment 44 | 6 | 7 | 0.87 | 7 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in Comparative Embodiments 41 to 43, the first protruding portion 411 has a small diameter and poor torsion, and the connecting post 51 has an excessively large diameter and thus occupies space; and the torsion limit value that the first protruding portion 411 can withstand is small, and parts of the first protruding portion 411 may break, and thus the anti-rotation effect is poor.

In Comparative Embodiments 44 to 46, the first protruding portion 411 has a large diameter and thus occupies a lot of space, which correspondingly leads to insufficient strength of parts of the first groove 42, at which point the first protruding portion 411 can withstand a small torsion limit value and the first insulating member 3 is subjected to a high risk of partial cracking, and thus the anti-rotation effect is not good.

In contrast, in Embodiments 41 to 44, the ratio of the diameter D2 of the first protruding portion 411 to the diameter D1 of the connecting post 51 satisfies the condition of 0.01 to 0.98, so that the first insulating member 3 and the first protruding portion 411 are at a lower risk of cracking, and thus the anti-rotation effect is good.

In some embodiments, the ratio of the diameter D2 of the first protruding portion 411 to the protruding height H of the first protruding portion 411 is 0.1 to 10.

For example, the ratio of the diameter D2 of the first protruding portion 411 to the protruding height H of the first protruding portion 411 may be 0.1, 0.2, 0.4, 0.6, 0.8, 1, 2, 3, 4, 5, 6, 7, 8, 9, 10, and the like.

As demonstrated by extensive experiments conducted by the inventor, in this embodiment, when the ratio of D2 to H is less than 0.1, the diameter of the first protruding portion 411 is too small or the protruding height of the first protruding portion 411 is too high, which reduces the structural strength of the first protruding portion 411 itself. When the ratio of D2 to H is greater than 10, the protruding height of the first protruding portion 411 is made too small, and thus the anti-torsion effect is not good, and the first protruding portion 411 is prone to slide out of the first groove 42 at this time.

Table 5 below illustrates the comparative results of Comparative Embodiments 51 to 56 in which the ratio of D2 to H does not satisfy the condition of 0.1 to 10, and Embodiments 51 to 54 in which the ratio of D2 to H satisfies the condition of 0.1 to 10.

**Table 5 Comparative results of Comparative Embodiments 51 to 56 and Embodiments 51 to 54**

| | D2 (mm) | H (mm) | D2/H (mm/mm) | Torsion limit value (N • m) | Effect |
|---|---|---|---|---|---|
| Comparative Embodiment 51 | 0.4 | 5 | 0.08 | 1 | The first protruding portion is broken. |
| Comparative Embodiment 52 | 1 | 11 | 0.09 | 1 | The first protruding portion is broken. |
| Comparative Embodiment 53 | 1.3 | 14 | 0.09 | 1 | The first protruding portion is broken. |
| Comparative Embodiment 54 | 40 | 3.8 | 10.5 | 2 | The first protruding portion slides out. |
| Comparative Embodiment 55 | 6 | 0.5 | 12 | 2 | The first protruding portion slides out. |
| Comparative Embodiment 56 | 42 | 1 | 42 | 2 | The first protruding portion slides out. |
| Embodiment 51 | 2 | 2 | 1 | 7 | Good anti-rotation effect |
| Embodiment 52 | 5 | 5 | 1 | 9 | Good anti-rotation effect |
| Embodiment 53 | 6 | 3 | 2 | 9 | Good anti-rotation effect |
| Embodiment 54 | 20 | 3 | 6.67 | 7 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in the Comparative Embodiments 51 to 53, the first protruding portion 411 occupies a large height space, and thus affects the energy density of the battery cell; moreover, the first protruding portion 411 has an excessively small diameter and is of low strength, and thus can withstand a small torsion limit value, at which time the first protruding portion 411 is subjected to a high risk of breakage, and thus the anti-rotation effect is not good.

In Comparative Embodiments 54 to 56, the height of the first protruding portion 411 is small, the torsion limit value that the first protruding portion 411 can withstand is small, and the first protruding portion 411 is prone to slide out of the first groove 42, and thus the anti-rotation effect is poor.

In contrast, in Embodiments 51 to 54, the diameter and height of the first protruding portion 411 are of the right size so that it is neither at risk of breakage nor prone to slide out of the first groove 42, and thus the anti-rotation effect is good.

In some embodiments, the ratio of the diameter D2 of the second protruding portion 412 to the protruding height h of the first protruding portion 411 may also be set to be 0.1-10.

In some embodiments, the ratio of the volume V of the first protruding portion 411 to the diameter D2 of the first protruding portion 411 is 2 to 400.

For example, the ratio of the volume V of the first protruding portion 411 to the diameter D2 of the first protruding portion 411 may be 2, 5, 10, 20, 40, 60, 80, 100, 150, 200, 250, 300, 350, 400, and the like.

As demonstrated by extensive experiments conducted by the inventor, in this embodiment, when the ratio of V to D2 is less than 2, the protruding height of the first protruding portion 411 is made too small, and thus the anti-torsion effect is not good, and the first protruding portion 411 is prone to slide out of the first groove 42 at this time. In contrast, when the ratio of V to D2 is greater than 400, the diameter of the first protruding portion 411 is made too small or the protruding height of the first protruding portion 411 is too large, which reduces the structural strength of the first protruding portion 411 itself.

Table 6 below illustrates the comparative results of Comparative Embodiments 61 to 66 in which the ratio of V to D2 does not satisfy the condition of 2 to 400, and Embodiments 61 to 64 in which the ratio of V to D2 satisfies the condition of 2 to 400.

**Table 6 Comparative results of Comparative Embodiments 61 to 66 and Embodiments 61 to 64**

| | H (mm) | V (mm³) | D2 (mm) | V/D2 (mm³/mm) | Torsion limit value (N • m) | Effect |
|---|---|---|---|---|---|---|
| Comparative Embodiment 61 | 0.6 | 7.2 | 4 | 1.8 | 1 | The first protruding portion slides out. |
| Comparative Embodiment 62 | 2 | 2.3 | 1.2 | 1.9 | 1 | The first protruding portion slides out. |
| Comparative Embodiment 63 | 1.2 | 3.8 | 2 | 1.9 | 1 | The first protruding portion slides out. |
| Comparative Embodiment 64 | 52 | 4082 | 10 | 408 | 2 | The first protruding portion is broken. |
| Comparative Embodiment 65 | 130.6 | 1640 | 4 | 420 | 2 | The first protruding portion is broken. |
| Comparative Embodiment 66 | 5 | 47493 | 110 | 431 | 4 | The first protruding portion occupies a large space. |
| Embodiment 61 | 2.1 | 60 | 6 | 10 | 10 | Good anti-rotation effect |
| Embodiment 62 | 3 | 37.7 | 4 | 40 | 11 | Good anti-rotation effect |
| Embodiment 63 | 5 | 1570 | 5 | 79 | 9 | Good anti-rotation effect |
| Embodiment 64 | 10 | 7065 | 30 | 236 | 11 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in Comparative Embodiments 61 to 63, the height of the first protruding portion 411 is too small, so the anti-torsion effect is not good, and the first protruding portion 411 is prone to slide out of the first groove 42, and thus the anti-rotation effect is not good.

In Comparative Embodiments 64 and 65, the anti-rotation height of the first protruding portion 411 is too high and the torsion limit value that the first protruding portion 411 can withstand is small, so that the first protruding portion 411 has a large risk of breakage, and thus the anti-rotation effect is not good; and in Comparative Embodiment 66, the first protruding portion 411 occupies a large height space, which affects the energy density of the battery cell.

In contrast, in Embodiments 61 to 64, the height and volume of the first protruding portion 411 are of the right size so that it is neither at risk of breakage nor prone to slide out of the first groove 42, and thus the anti-rotation effect is good.

In some embodiments, the ratio of the volume V of the second protruding portion 412 to the diameter D2 of the second protruding portion 412 may also be set to be 2 to 400.

In some embodiments, the first insulating member 3 is of a square structure, and in a length direction of the first insulating member 3, the distance from at least one of both the anti-rotation components 41 to the connecting post 51 is L; and in a width direction of the first insulating member 3, and the distance from the anti-rotation component 41 to the connecting post 51 is W, wherein the ratio of W to L is greater than or equal to 0.01.

For example, the ratio of W to L can be 0.01, 1, 2, 5, 8, 10, and so on.

As demonstrated by extensive experiments conducted by the inventor, in this embodiment, when the ratio of W to L is less than 0.01, the anti-rotation component 41 and the connecting post 51 are approximately located on the same horizontal line, at which time the anti-torsion effect is poor.

**In** some embodiments, in the length direction of the first insulating member 3, the distance L from the at least one of both the anti-rotation components 41 to the connecting post 51 may be 0.2 to 500.

For example, L can be 0.2, 0.5, 0.8, 1, 2, 5, 8, 10, 50, 80, 100, 200, 300, 400, 500, and so on.

**In** some embodiments, in the width direction of the first insulating member 3, the distance W from the anti-rotation component 41 to the connecting post 51 may be 0.2 to 500.

For example, W can be 0.2, 0.5, 0.8, 1, 2, 5, 8, 10, 50, 80, 100, 200, 300, 400, 500, and so on.

Table 7 below illustrates the comparative results of the Comparative Embodiments 71 to 73 in which the ratio of W to L is less than 0.01 and the Embodiments 71 to 73 in which the ratio of W to L is greater than or equal to 0.01.

**Table 7 Comparative results of Comparative Embodiments 71 to 73 and Embodiments 71 to 73**

| | L (mm) | W (mm) | W/L (mm³/mm) | Torsion limit value (N • m) | Effect |
|---|---|---|---|---|---|
| Comparative Embodiment 71 | 10 | 0 | 0 | 4 | The anti-rotation component is broken |
| Comparative Embodiment 72 | 100 | 0.1 | 0.001 | 2 | The anti-rotation component is broken |
| Comparative Embodiment 73 | 100 | 0.9 | 0.009 | 4 | The anti-rotation component is broken |
| Embodiment 71 | 10 | 5 | 0.5 | 8 | Good anti-rotation effect |
| Embodiment 72 | 10 | 8 | 0.8 | 9 | Good anti-rotation effect |
| Embodiment 73 | 10 | 10 | 1 | 11 | Good anti-rotation effect |

In the Comparative Embodiments and embodiments in the above table, the first insulating member 3 is made of a PP material (Polypropylene), the anti-rotation component 41 is made of a ceramic material, and the first cover plate 1 and the second cover plate 2 are made of aluminum.

According to the data in the above table, it can be seen that in Comparative Embodiments 71 to 73, the ratio of W to L is less than 0.01, and thus the torsion limit value that the anti-rotation component 41 can withstand is small, and thus the anti-rotation component 41 is prone to break; in contrast, in Embodiments 71 to 73, the ratios of W to L are all greater than 0.01, and thus the torsion limit value that the anti-rotation component 41 can withstand is large. It can be seen that when the ratio of W to L is greater than 0.01, the torsion limit value that the anti-rotation component 41 can withstand is significantly larger, and thus the anti-rotation effect is significantly improved.

As shown in Figs. 7 and 8, in some embodiments, the end cover assembly 10 further comprises a first conductive member 5 and a second conductive member 6, wherein the second conductive member 6 is disposed on the side of the second cover plate 2 that is far from the first insulating member 3, and the first conductive member 5 comprises a connecting post 51 and a position-limiting portion 52, wherein the position-limiting portion 52 is disposed on the side of the first cover plate 1 that is far from the first insulating member 3, the first cover plate 1 is provided with a first through hole 11, the second cover plate 2 is provided with a second through hole 21, and the first insulating member 3 is provided with a third through hole 31, the connecting post 51 passing through the first through hole 11, the third through hole 31, and the second through hole 21 in sequence and being connected to the second conductive member 6, and the position-limiting portion 52 is used to limit the movement of the first conductive member 5 along the axial direction of the first through hole 11.

In this embodiment, the electrical connection between the first electrode assembly 40 in the first case 20 and the second electrode assembly 50 in the second case 30 is realized by the first conductive member 5 and the second conductive member 6.

In some embodiments, the second conductive member 6 is provided with a fourth through hole 61 and the connecting post 51 passes through the fourth through hole 61 to realize the connection between the first conductive member 5 and the second conductive member 6.

In some embodiments, the end cover assembly 10 further comprises a second insulating member 7 and a third insulating member 8, wherein the second insulating member 7 is disposed between the first cover plate 1 and the position-limiting portion 52, the third insulating member 8 is disposed between the second cover plate 2 and the second conductive member 6, the second insulating member 7 is provided with a fifth through hole 71, the third insulating member 8 is provided with a sixth through hole 81, and the connecting post 51 passes through the fifth through hole 71 and sixth through hole 81.

In this embodiment, with the second insulating member 7, the first cover plate 1 can be electrically isolated from the position-limiting portion 52 of the first conductive member 5; and with the third insulating member 8, the second cover plate 2 can be electrically isolated from the second conductive member 6.

In some embodiments, the end cover assembly 10 further comprises a first sealing member 91, wherein the first sealing member 91 is provided between the position-limiting portion 52 and the second insulating member 7, the first sealing member 91 is provided with a seventh through hole, the connecting post 51 passes through the seventh through hole, and the first sealing member 91 is embedded into the fifth through hole 71 and the first through hole 11 along an axial direction to isolate the first cover plate 1 from the position-limiting portion 52 and the first cover plate 1 from the connecting post 51; and/or it further comprises a second sealing member 92, wherein the second sealing member 92 is provided between the second conductive member 6 and the third insulating member 8, the second sealing member 92 is provided with an eighth through hole, the connecting post 51 passes through the eighth through hole, and the second sealing member 92 is embedded into the sixth through hole 81 and the second through hole 21 along the axial direction to isolate the second cover plate 2 from the second conductive member 6 and the second cover plate 2 from the connecting post 51.

**In** this embodiment, by providing the first sealing member 91, it is possible to enable a tight connection between the position-limiting portion 52 of the first conductive member 5 and the second insulating member 7 in the axial direction to isolate the position-limiting portion 52 of the first conductive member 5 from the first cover plate 1 in the axial direction and to isolate the first cover plate 1 from the connecting post 51 of the first conductive member 5 in the radial direction. By providing the second sealing member 92, it is possible to enable a tight connection between the second conductive member 6 and the third insulating member 8 in the axial direction to isolate the second conductive member 6 from the second cover plate 2 in the axial direction and to isolate the second cover plate 2 from the connecting post 51 of the first conductive member 5 in the radial direction.

Embodiments of the battery cell and end cover assembly provided by the present application are described below in conjunction with Figs. 3 to 17 of the accompanying drawings.

As shown in Figs. 3 to 6, the battery cell comprises an end cover assembly 10, a first case 20, a second case 30, a first electrode assembly 40, a second electrode assembly 50, a first end cover assembly 60, and a second end cover assembly 70.

The first case 20 and the second case 30 each have an opening, the first electrode assembly 40 is accommodated inside the first case 20, and the second electrode assembly 50 is accommodated inside the second case 30.

The opening of the first case 20 and the opening of the second case 30 are provided opposite each other, and the end cover assembly 10 is provided between the first case 20 and the second case 30. The first end cover assembly 60 and the second end cover assembly 70 are provided at the ends of the openings of the first case 20 and the second case 30, respectively, that are far from each other.

The first case 20 and the second case 30 are both square shaped cases.

As shown in Figs. 7 and 8, the end cover assembly comprises a first cover plate 1, a second cover plate 2, a first insulating member 3, anti-rotation means 4, a first conductive member 5, a second conductive member 6, a second insulating member 7, a third insulating member 8, a first sealing member 91, and a second sealing member 92.

The first insulating member 3 is provided between the first cover plate 1 and the second cover plate 2 to insulate the first cover plate 1 and the second cover plate 2 from each other.

The second insulating member 7 is provided on the side of the first cover plate 1 that is far from the first insulating member 3, and the third insulating member 8 is provided on the side of the second cover plate 2 that is far from the first insulating member 3. The first conductive member 5 comprises a connecting post 51 and a position-limiting portion 52, wherein the position-limiting portion 52 is provided on the side of the second insulating member 7 that is far from the first cover plate 1, and the connecting post 51 is connected to the side of the position-limiting portion 52 that is close to the second insulating member 7. The second conductive member 6 is provided on the side of the third insulating member 8 that is far from the second cover plate 2.

The first cover plate 1 is provided with a first through hole 11, the second cover plate 2 is provided with a second through hole 21, the first insulating member 3 is provided with a third through hole 31, the second conductive member 6 is provided with a fourth through hole 61, the second insulating member 7 is provided with a fifth through hole 71, the third insulating member 8 is provided with a sixth through hole 81, the first sealing member 91 is provided with a seventh through hole and the second sealing member 92 is provided with an eighth through hole, and the connecting post 51 passes through the seventh through hole, the fifth through hole 71, the first through hole 11, the third through hole 31, the second through hole 21, the sixth through hole 81, the eighth through hole, and the fourth through hole 61 in sequence to connect to the second conductive member 6, and the position-limiting portion 52 is used to limit the movement of the first conductive member 5 along the axial direction of the first through hole 11.

The first cover plate 1, the second cover plate 2, the first insulating member 3, the position-limiting portion 52 of the first conductive member 5, the second conductive member 6, the second insulating member 7, and the third insulating member 8 are all of square shapes.

The first electrode assembly 40 in the first case 20 and the second electrode assembly 50 in the second case 30 are electrically connected via the first conductive member 5 and the second conductive member 6.

By providing the first sealing member 91 between the position-limiting portion 52 and the second insulating member 7, it is possible to enable a tight connection between the position-limiting portion 52 of the first conductive member 5 and the second insulating member 7 in the axial direction to isolate the position-limiting portion 52 of the first conductive member 5 from the first cover plate 1 in the axial direction and to isolate the first cover plate 1 from the connecting post 51 of the first conductive member 5 in the radial direction. By providing the second sealing member 92 between the second conductive member 6 and the third insulating member 8, it is possible to enable a tight connection between the second conductive member 6 and the third insulating member 8 in the axial direction to isolate the second conductive member 6 from the second cover plate 2 in the axial direction and to isolate the second cover plate 2 from the connecting post 51 of the first conductive member 5 in the radial direction.

The anti-rotation means 4 comprises an anti-rotation component 41, a first groove 42 and a second groove 43.

The anti-rotation component 41 comprises a first protruding portion 411, a second protruding portion 412, and an intermediate portion 413 connected between the first protruding portion 411 and the second protruding portion 412. The first groove 42 is provided on the first cover plate 1 and has an opening facing the first insulating member 3. The second groove 43 is provided on the second cover plate 2 and has an opening facing the first insulating member 3.

The first insulating member 3 is provided with a mounting hole 44, the anti-rotation component 41 is mounted in the mounting hole 44, and the first protruding portion 411 protrudes from a surface of the first insulating member 3 that is close to the first cover plate 1 and the second protruding portion 412 protrudes from a surface of the first insulating member 3 that is close to the second cover plate 2, the first protruding portion 411 is inserted into the first groove 42 and the second protruding portion 412 is inserted into the second groove 43.

As shown in Fig. 9, an anti-rotation component 41 is provided on each of the two sides of the third through hole 31, and the first protruding portion 411 and the second protruding portion 412 of the anti-rotation component 41 protrude from the two sides of the first insulating member 3, respectively.

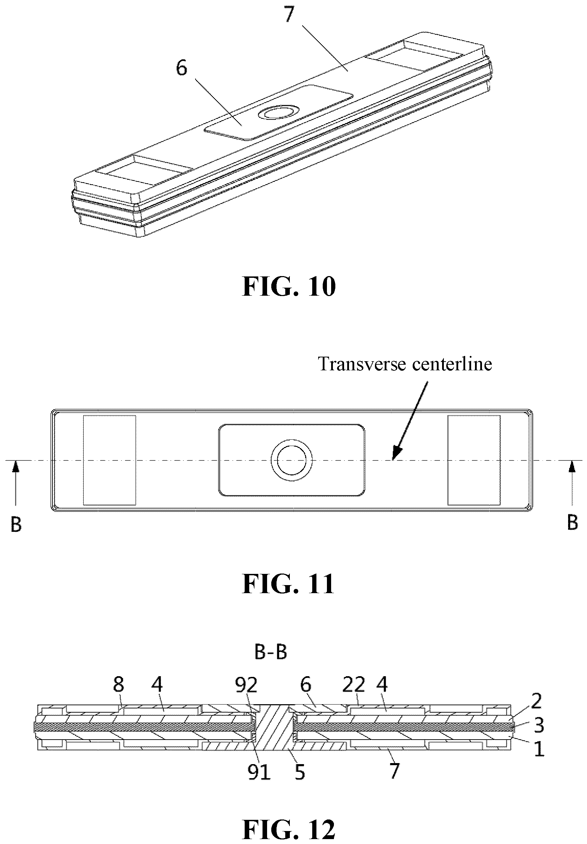

As shown in Figs. 10 to 12, neither of the two anti-rotation components 41 is provided on the transverse centerline of the first insulating member 3.

As shown in Fig. 13, the height of the second protruding portion 412 protruding from the first insulating member 3 is H.

As shown in Figs. 14 and 15, the centers of the two anti-rotation components are on the same straight line as the third through hole 31 and the straight line is inclined with respect to the transverse centerline of the first insulating member 3.

As shown in Figs. 16 and 17, the diameter of the connecting post 51 is D1, the distance between the connecting post 51 and the first protruding portion 411 on the right side is d, the distance between the connecting post 51 and the first protruding portion 411 on the right side in the length direction is L, the distance between the connecting post 51 and the first protruding portion 411 on the right side in the width direction is W, the diameter of the first protruding portion 411 is D2, and the diameter of the mounting hole 44 on the first insulating member 3 is D3.

In this embodiment, the ratio of a volume V of the first protruding portion 411 to a protruding height H of the first protruding portion 411 protruding from the first insulating member 3 is 1.5 to 1300. The ratio of the diameter D2 of the anti-rotation component 41 to the diameter D3 of the mounting hole 44 is 0.8 to 1. The ratio of the distance d between the first protruding portion 411 and the connecting post 51 to the diameter D1 of the connecting post 51 is 0.5 to 20. The ratio of the diameter D2 of the first protruding portion 411 to the diameter D1 of the connecting post 51 is 0.01 to 0.98. The ratio of the diameter D2 of the first protruding portion 411 to the protruding height H of the first protruding portion 411 is 0.1 to 10. The ratio of the volume V of the first protruding portion 411 to the diameter D2 of the first protruding portion 411 is 2 to 400. The ratio of the distance W to the distance L is greater than or equal to 0.01.

The end cover assembly embodiments provided in the present application have a high anti-torsion capability, and can effectively prevent relative rotation between the first insulating member and the first cover plate and between the first insulating member and the second cover plate, thereby improving the anti-torsion capacity between the first cover plate and the second cover plate, thus enhancing the anti-torsion capacity of the entire battery cell, which avoids dangerous accidents such as leakage of liquid from the battery cell, thus improving the safety performance of the battery cell.

Although the present application has been described with reference to the preferred embodiments, various improvements can be made thereto and components thereof can be replaced with equivalents without departing from the scope of the present application. In particular, the technical features mentioned in the various examples can be combined in any manner as long as there is no structural conflict. The present application is not limited to the specific embodiments disclosed herein, but rather comprises all technical solutions falling within the scope of the claims.

## Claims

1. An end cover assembly (10), comprising:
a first cover plate (1) for closing a first case (20);
a second cover plate (2) for closing a second case (30), the second cover plate (2) being disposed opposite to the first cover plate (1) along a first direction;
a first insulating member (3) provided between the first cover plate (1) and the second cover plate (2); and
anti-rotation means (4) provided between the first insulating member (3) and the first cover plate (1) and between the first insulating member (3) and the second cover plate (2) so as to prevent relative rotation between the first insulating member (3) and the first cover plate (1) and relative rotation between the first insulating member (3) and the second cover plate (2).

2. The end cover assembly (10) according to claim 1, wherein the anti-rotation means (4) comprises an anti-rotation component (41), a first groove (42) provided in the first cover plate (1), and a second groove (43) provided in the second cover plate (2), wherein the anti-rotation component (41) is provided on the first insulating member (3), and the anti-rotation component (41) comprises a first protruding portion (411) protruding from the first insulating member (3) and inserted at least partially into the first groove (42) and a second protruding portion (412) protruding from the first insulating member (3) and inserted at least partially into the second groove (43).

3. The end cover assembly (10) according to claim 2, wherein the first protruding portion (411) and the first insulating member (3) are integrally formed; and/or the second protruding portion (412) and the first insulating member (3) are integrally formed.

4. The end cover assembly (10) according to claim 2, wherein the first insulating member (3) is provided with a mounting hole (44), the anti-rotation component (41) further comprises an intermediate portion (413) inserted in the mounting hole (44), and the first protruding portion (411), the second protruding portion (412), and the intermediate portion (413) are integrally formed.

5. The end cover assembly (10) according to claim 4, wherein the anti-rotation component (41) is cylindrically shaped, and the ratio of a diameter D2 of the anti-rotation component (41) to a diameter D3 of the mounting hole (44) is 0.8 to 1.

6. The end cover assembly (10) according to any one of claims 2 to 5, wherein the ratio of a volume V of the first protruding portion (411) to a protruding height H of the first protruding portion (411) protruding from the first insulating member (3) is 1.5 to 1300.

7. The end cover assembly (10) according to any one of claims 2 to 6, further comprising a connecting post (51), wherein the first cover plate (1) is provided with a first through hole (11), the second cover plate (2) is provided with a second through hole (21), and the first insulating member (3) is provided with a third through hole (31), the connecting post (51) passing through the first through hole (11), the third through hole (31), and the second through hole (21) in sequence for electrically connecting a first electrode assembly (40) provided in the first case (20) and a second electrode assembly (50) provided in the second case (30).

8. The end cover assembly (10) according to claim 7, wherein the connecting post (51) is cylindrically shaped, the distance from at least one of the first protruding portion (411) and the second protruding portion (412) to the connecting post (51) is d, and the connecting post (51) has a diameter of D1, where the ratio of d to D1 is 0.5 to 20.

9. The end cover assembly (10) according to any one of claims 2 to 8, wherein the first protruding portion (411) and the second protruding portion (412) are cylindrically shaped.

10. The end cover assembly (10) according to claim 9, wherein the connecting post (51) is cylindrically shaped, at least one of the first protruding portion (411) and the second protruding portion (412) has a diameter of D2, and the connecting post (51) has a diameter of D1, wherein the ratio of D2 to D1 is 0.01 to 0.98.

11. The end cover assembly (10) according to claim 9 or 10, wherein the ratio of the diameter D2 of the first protruding portion (411) to the protruding height H of the first protruding portion (411) is 0.1 to 10.

12. The end cover assembly (10) according to any one of claims 9 to 11, wherein the ratio of the volume V of the first protruding portion (411) to the diameter D2 of the first protruding portion (411) is 2 to 400.

13. The end cover assembly (10) according to any one of claims 7 to 12, wherein the first insulating member (3) is of a square structure, and in a length direction of the first insulating member (3), the distance from the anti-rotation component (41) to the connecting post (51) is L; and in a width direction of the first insulating member (3), the distance from the anti-rotation component (41) to the connecting post (51) is W, wherein the ratio of W to L is greater than or equal to 0.01.

14. A battery cell (101), comprising the end cover assembly (10) according to any one of claims 1 to 13.

15. A battery (100), comprising a box body (102) and the battery cell (101) according to claim 14, wherein the battery cell (101) is provided in the box body (102), and the battery cell (101) is used to provide electrical energy.

16. An electrical apparatus, comprising the battery cell (101) according to claim 14, the battery cell (101) being used to supply electrical energy to the electrical apparatus; or, comprising the battery (100) according to claim 15, the battery (100) being used to supply electrical energy to the electrical apparatus.
